# FASCICULE DE BREVET EUROPEEN

(11) **EP 0 394 102 B1**
(45) Date de publication et mention de la délivrance du brevet: **14.07.1993**
(21) Numéro de dépôt: 90401003.0
(22) Date de dépôt: 12.04.1990
(51) Int. Cl.: F02K 3/065, F02K 3/072, F02K 3/077

(54) **Moteur à grand taux de dilution à soufflante amont et soufflante aval contrarotatives**
Strahltriebwerk mit entgegengesetzter Drehrichtung und mit Front- und Heckgebläse
Counter-rotating engine with high bypass fans fore and aft

(30) Priorité: 18.04.1989 FR 8905144
(43) Date de publication de la demande: 24.10.1990
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Lardellier, Alain, Marie, Joseph, F-77000 Melun (FR)
(74) Mandataire: Moinat, François

(56) Documents cités:
- DE-A- 1 428 220
- FR-A- 2 172 078
- FR-A- 2 398 890
- GB-A- 587 528
- GB-A- 588 096
- GB-A- 2 038 948
- US-A- 3 938 328

## Description

La présente invention a pour objet un groupe turboréacteur d'aviation à grand taux de dilution.

Il est connu depuis de nombreuses années d'utiliser des turboréacteurs à double flux pour la propulsion subsonique, l'avantage du mélange des flux froid et chaud étant d'augmenter la poussée du moteur chaud.

Toutefois, dans la pratique on est limité dans les taux de dilution admissibles pour de tels moteurs en raison de leur encombrement frontal et du fort maître-couple qui en est le corrolaire et qui, au-delà d'un taux de dilution compris entre 8 et 14, devient prohibitif, entraîne une traînée importante et empêche dans la pratique le montage de tels moteurs sous les ailes d'un avion.

Si l'on veut dépasser un taux de dilution de 8, on est amené à utiliser la solution des turboréacteurs classiques à soufflante amont, jusqu'à une valeur de taux de dilution de 11 environ, le nombre de turbines du corps basse pression étant compris entre 5 et 8.

Il est déja connu par le FR-A-2.172.078 de réaliser un turboréacteur à grand taux de dilution comportant une soufflante amont et une soufflante aval.

Mais dans ce dispositif antérieur, la soufflante aval est entraînée, par le dernier étage de turbine, dans le même sens que la soufflante amont ce qui conduit à des vitesses de rotations élevées donc à des limitations en puissance des moteurs. Par ailleurs, l'admission d'air de la soufflante aval se fait autour de l'admission d'air de la soufflante amont ce qui augmente le diamètre de la machine.

Entre 11 et 14 de taux de dilution, la solution classique ne convient plus (nombre de turbines basse pression excessif) et il faut faire appel à un réducteur dans le cas de la soufflante amont, ou à une soufflante aval contrarotative entraînée directement par une turbine de puissance contrarotative à étages imbriqués.

Au-delà de 14 de taux de dilution, on entre dans le domaine des turboréacteurs à hélice rapide.

Ces moteurs sont intéressants par leur gain de consommation spécifique, mais ont pour inconvénient, à cause de leur fort encombrement diamétral, de ne pouvoir s'installer qu'en position arrière de part et d'autre du fuselage de l'avion, ou de nécessiter des installations sous l'aile très intégrées et non conventionnelles du type de celle proposée par exemple par le document FR-A-2 622 507.

La présente invention a pour but de fournir une solution intermédiaire permettant de réaliser des groupes turboréacteurs possédant un taux de dilution compris entre 8 et 14 et présentant un encombrement frontal très peu supérieur à celui des turboréacteurs double flux actuels ayant un taux de dilution inférieur à 6.

L'invention a également pour but de réaliser un tel moteur à taux de dilution et poussée augmentés, sans nécessiter l'accroissement du nombre total de grilles d'aubes du moteur, ce qui aurait une influence néfaste sur le coût dudit moteur.

On parvient à ces résultats en réalisant un turboréacteur à grand taux de dilution comportant de façon connue un corps basse pression comprenant une soufflante amont liée à un compresseur basse pression, le corps basse pression étant entraîné par une turbine basse pression à quatre étages, ladite turbine étant elle-même entraînée par un générateur de gaz comportant un compresseur haute pression, une soufflante aval, une chambre de combustion et une turbine haute pression entraînant le compresseur haute pression.

Selon la particularité de l'invention, le turboréacteur comporte, imbriquée avec la turbine basse pression, déjà citée, une turbine lente contrarotative entraînant la soufflante aval à grand taux de dilution. De plus, ce moteur comporte deux circuits de flux froids séparés. Le premier circuit traverse la soufflante amont et possède une entrée d'air frontale commune avec le flux primaire et une sortie d'air formée de deux demi-lunes encadrant latéralement l'éjection de la soufflante aval. Le second circuit, traverse la soufflante aval et possède une entrée d'air formée de deux demi-lunes encadrant latéralement la soufflante amont, les canaux issus des deux demi-lunes de la seconde entrée d'air se rejoignent pour former autour du flux chaud un canal annulaire dans lequel est disposée la soufflante aval. La sortie du second flux froid est annulaire et entoure le flux chaud.

Selon un dimensionnement préféré de l'invention, la soufflante amont a un diamètre tel que le taux de dilution entre le flux froid qui la traverse et le flux chaud est compris entre 6 et 8 tandis que la soufflante aval à un diamètre tel que son taux de dilution entre le flux froid qui la traverse et le flux chaud est compris entre 4 et 6.

Le faible encombrement du groupe turboréacteur ainsi formé est dû à une particularité de l'invention autorisant un arrangement technologique de faible maître-couple.

Selon une particularité importante de l'invention, le groupe turboréacteur comporte une nacelle possédant deux coquilles basculantes et c'est dans la structure même de la nacelle que sont réalisés les canaux formant les deux circuits de flux froids imbriqués.

Cette structure permet de réaliser une nacelle de forme générale ovoïde dont les sections droites sont en forme d'ellipses de grand axe horizontal, ce qui permet de disposer lesdites nacelles nécessitant une faible garde au sol, sous l'aile d'un avion.

D'autres particularités de l'invention seront explicitées à la lumière du complément de description qui va suivre accompagné de planches de dessins parmi lesquelles :
- la figure 1 est une vue en coupe longitudinale d'un turboréacteur selon l'invention ;
- la figure 2 montre un schéma des circuits d'air froid. Les circuits ont été séparés pour simplifier la compréhension de l'ensemble, la figure 2a montrant le premier circuit d'air froid traversant la soufflante amont tandis que la figure 2b montre le second circuit traversant la soufflante aval ;
- la figure 3 est une vue en perspective de trois quarts arrière d'un groupe turboréacteur monté dans sa nacelle et suspendu à un mât d'avion ;
- la figure 4 est une vue similaire d'un même turboréacteur montrée en position d'inversion de poussée, les deux portes de l'inverseur étant déployées.
- la figure 5 montre le même moteur, avec une des coquilles de la nacelle basculée vers le haut pour l'accès au moteur ;
- les figures 6A à 6G sont des sections de la nacelle dans les plans de coupes A à G de la figure 5 ;
- la figure 7 montre le montage d'un moteur selon l'invention sous l'aile d'un avion.

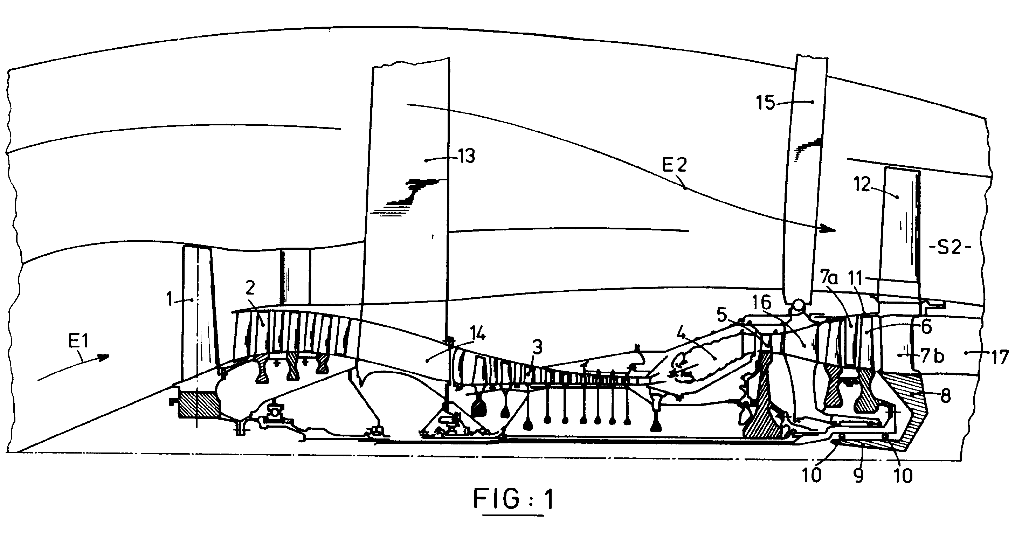

En regard de la figure 1, le moteur comporte de façon classique une soufflante amont 1 liée à un compresseur BP 2 suivi d'un compresseur HP 3, d'une chambre de combustion 4, d'une turbine HP 5 à un étage qui entraîne le compresseur HP 3 et d'une turbine BP 6 à quatre étages qui entraîne le corps basse pression 1, 2.

Selon l'invention, le moteur comporte à l'aval une turbine contrarotative 7 représentée ici avec deux étages 7a et 7b à titre d'exemple.

Selon un arrangement préférentiel tenant compte des taux de dilution indiqués ci-aprés et du dimensionnement des soufflantes amont et aval, une turbine à quatre étages sera préférée. Le disque 8 de la turbine 7 est porté par un arbre 9 monté à l'intérieur de l'arbre de turbine BP par l'intermédiaire de deux paliers 10.

Les deux étages 7a, 7b de la turbine sont liés entre eux par le carter externe 11 qui tourne en même temps qu'eux. L'ensemble porte une soufflante aval 12 de grand diamètre générant un taux de dilution ici de 5 (valeur non limitative), tandis que sur la figure, le taux de dilution de la soufflante amont est de 7 (valeur non limitative).

Les deux soufflantes 1 et 12 sont donc "en parallèle" et de vitesses contraires.
Le moteur est suspendu à un mât avion par un pylone amont 13 fixé sur les bras structuraux 14 et à l'aval par un pylone aval 15 solidaire du carter au niveau des bras du carter faisant office de redresseurs 16 de turbine HP.

Sur la figure 1, on a schématisé également le fait que les deux soufflantes sont alimentées par des circuits d'air séparés.

Le premier circuit comporte une entrée d'air E1 annulaire qui sera décrite plus loin et une sortie d'air S1 en forme de demi-lunes également décrites plus loin.

Le second circuit comporte une entrée d'air E2 en forme de demi-lunes latérales qui seront décrites plus loin et une sortie d'air S2 annulaire entourant le flux chaud 17.

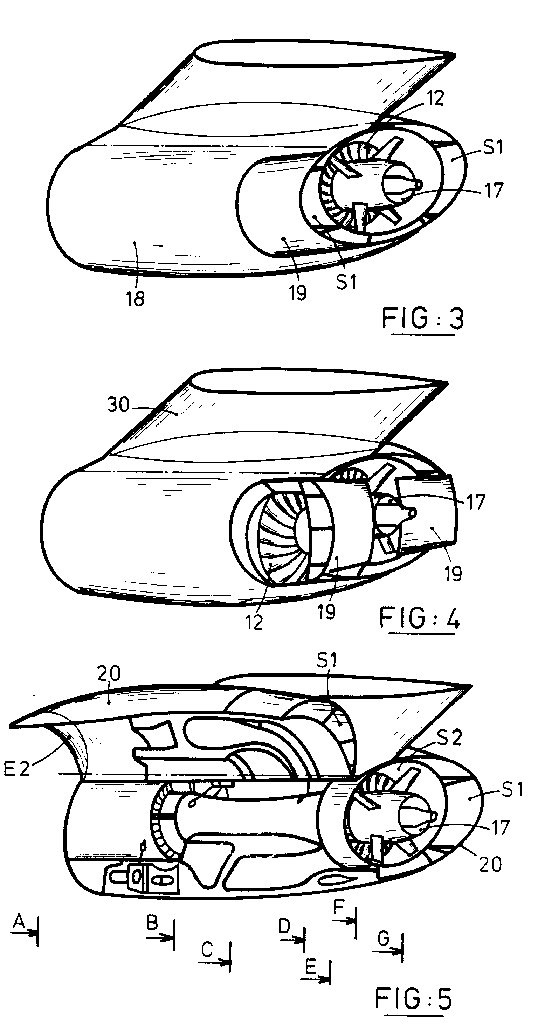

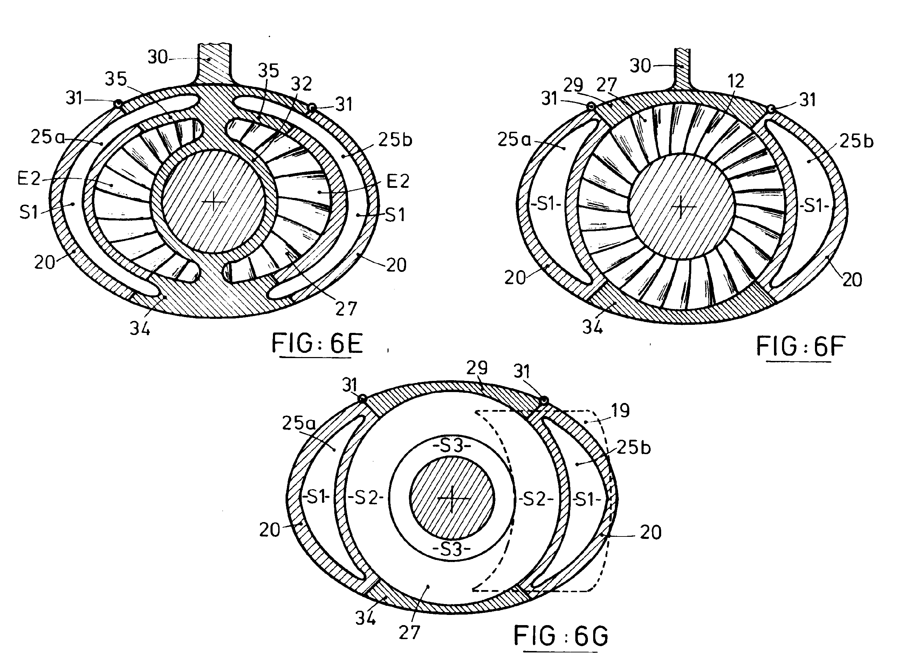

Sur les figures 3 et 4, le moteur monté dans la nacelle 18 est vu de 3/4 arrière. Il comporte un inverseur de flux à deux portes 19. Ces deux portes sont en fait la tuyère d'éjection du flux du premier circuit d'air froid et, en basculant, elles interceptent tout le flux du premier circuit issu de la soufflante amont ainsi qu'une partie du flux du second circuit de la soufflante aval ainsi que le montre égalementla figure 6G.

La figure 5 montre la nacelle avec une de ses coquilles latérales 20 ouverte vers le haut pour permettre l'accès au moteur.

On remarque sur la partie intérieure de la coquille ouverte que les circuits d'air froid sont "imprimés" dans la structure de la coquille et c'est donc la nacelle qui assure la répartition des circuits d'air.

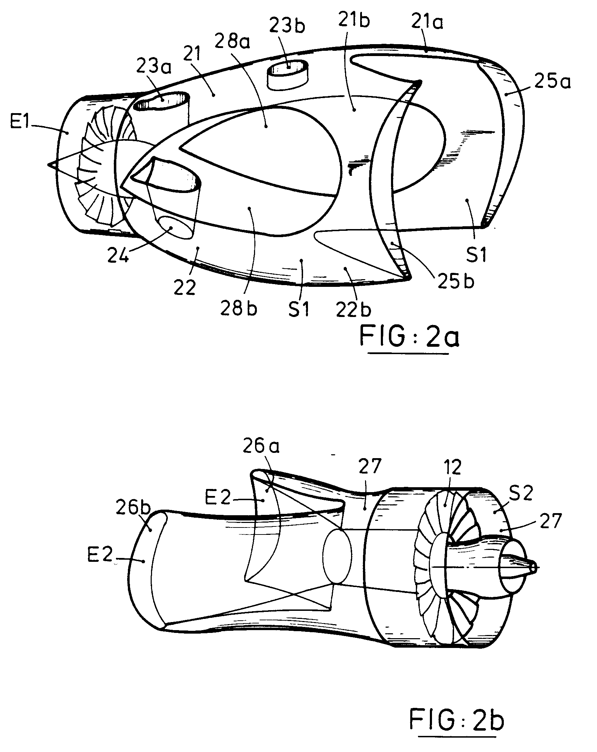

Ceux-ci sont schématisés aux figures 2a et 2b.

La figure 2a montre le premier circuit d'air qui alimente la soufflante amont. L'entrée d'air E1 est classique et commune avec celle du flux chaud. En aval de la soufflante 1, le circuit se sépare en deux canaux, l'un 21 au-dessus du moteur et l'autre 22 en-dessous du moteur. A la partie amont des deux canaux 21 et 22 sont réalisés deux puits verticaux, le premier 23a dans le canal 21 pour le passage de la suspension amont 13 et des équipements tandis que le second 24 permet le passage du renvoi d'angle en direction de la prise de mouvement et du boîtier d'engrenage 25 disposé en partie basse de la nacelle.

A sa partie aval, le canal supérieur 21 se sépare en deux banches 21a, 21b qui rejoignent latéralement vers le bas la partie aval du canal 22 elle-même séparée en deux branches 22a et 22b. Après la réunion des canaux 21a et 22a, respectivement 21b et 22b, chaque canal ainsi formé à l'allure d'une demi-lune verticale 25a, 25b dont l'ensemble forme la sortie d'air SI de la soufflante amont.

Sur la figure 2b, on voit le second circuit froid qui alimente la soufflante aval 12. A l'entrée amont, l'entrée d'air E2 est formé de deux demi-lunes verticales 26a, 26b qui,à section constante,prennent une forme plus rétreinte en pétale et se rejoignent pour former un canal annulaire 27 qui entoure le flux chaud pour alimenter la soufflante 12. En aval de la soufflante 12, le canal 27 garde sa forme annulaire.

Dans la pratique, ces deux circuits sont imbriqués, les canaux 26a, 26b occupant les espaces 28a, 28b formés (figure 2a) entre les canaux 21, 21a, 22 et 22a et respectivement 21, 21b, 22 et 22b.

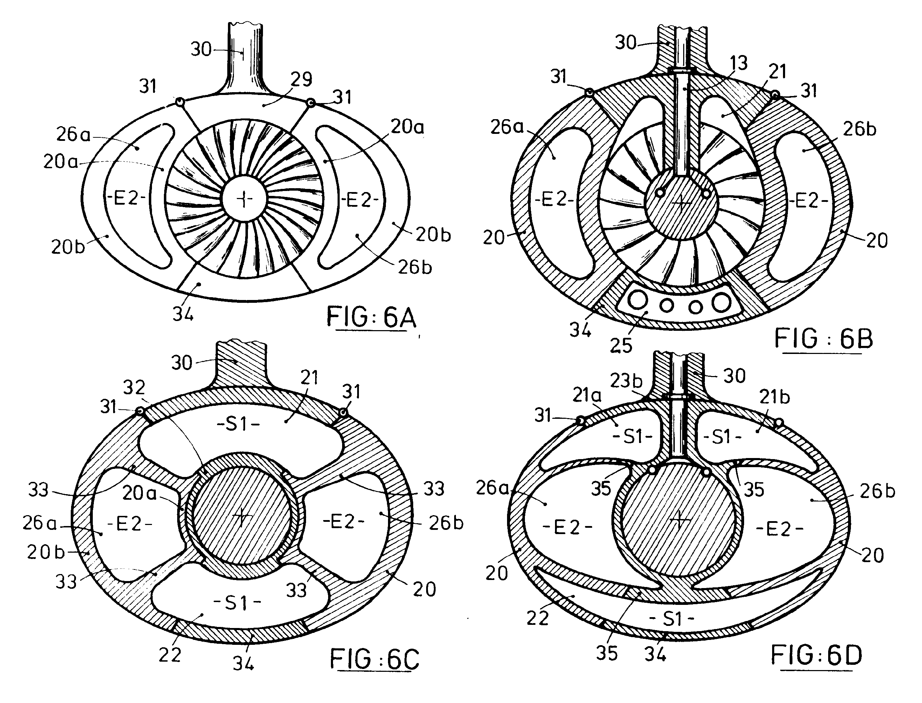

Pour permettre la réalisation d'une telle architecture, c'est la structure de la nacelle qui est mise à profit. La structure de la nacelle sera mieux comprise en regard des figures 6A à 6G.

La nacelle comprend une partie structurale comportant une poutre longitudinale supérieure 29 solidaire du mât support 30 et s'étendant sur toute la longueur de ladite nacelle.

La poutre 29 comporte deux bords latéraux portant des charnières 31 longitudinales de basculement des coquilles d'ouverture 20 de la nacelle.

Au niveau de la section B (figure 6B), la poutre 29 s'amincit pour former entre elle et le moteur le début du canal 21 de sortie S1 du premier circuit d'air. Jusqu'à cette section les coquilles 20 sont totalement occupées par les canaux 26a, 26b d'entrée E2 du second circuit. La partie inférieure de la nacelle est également structurale et comporte au niveau de la section B le logement du boîtier d'engrenage 25.

Au niveau de la section C (figure 6C), on voit que les canaux 26a, 26b se sont rétrécis en forme de pétales, les coquilles 20 comportant à ce niveau des cloisons radiales 33 qui relient la coque interne 20a et la coque externe 20b de la coquille. Ses cloisons séparent également les conduits 26a, 26b des conduits 21 et 22 formés respectivement entre la poutre supérieure 29 et le carter moteur 32 (pour le canal supérieur 21) et entre le carter 32 et la partie structurale inférieure 34 (pour le canal inférieur 22).

Au niveau de la section D (figure 6D), les coquilles 20 ne comportent plus de coque interne et les cloisons 33 sont dans le prolongement de moignons de cloisons 35 solidaires du carter 32 afin de séparer les conduits 26a, 21a et 22, respectivement 26b, 21b et 22. A ce niveau, un passage 23b est réalisé dans la poutre supérieure et le canal 21 pour le passage de la suspension aval 15.

Au niveau de la section E (figure 6E), les coquilles 20 ont à nouveau une coque interne 20a qui assure la séparation des canaux 25a, 25b et du canal 27 d'entrée E2 du second circuit.

A partir de la section F (figure 6F et suivante), les coquilles 20 ont à nouveau une forme complète de demi-lune et constituent les canaux 25a, 25b de sortie S1 du premier circuit.

A la figure 6G, on a représenté en pointillés une porte 19 d'inverseur ouverte.

On voit qu'en position d'inversion, toute la section S1 du premier circuit (canaux 25a et 25b) est obturée et qu'une partie de la section du canal 27 de sortie S2 de la soufflante aval est également obturée.

Ainsi l'inverseur a une efficacité maximale en intervenant sur les flux des deux soufflantes.

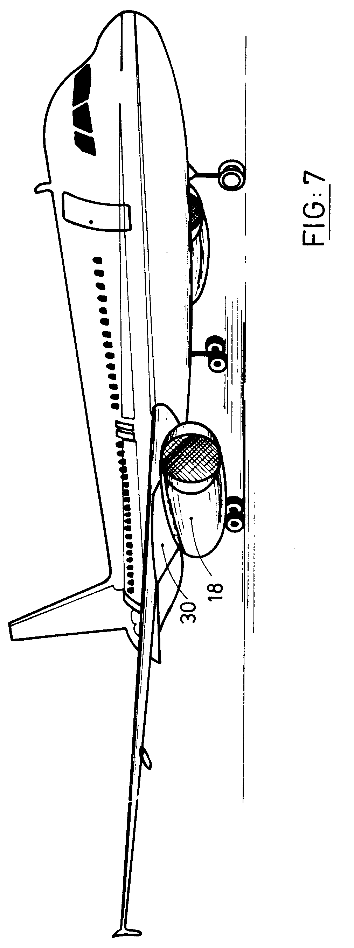

Si l'on regarde maintenant la figure 7, on voit que, par la forme ovoïde de la nacelle, le moteur selon l'invention placé sous l'aile d'un avion a une garde au sol améliorée par rapport à un moteur circulaire classique de même taux de dilution, ou si l'on regarde le problème autrement, avec la même garde au sol qu'un moteur classique, on peut disposer sous l'aile d'un avion un moteur de plus grand taux de dilution s'il est réalisé selon le principe de l'invention.

## Revendications

1. Turboréacteur à grand taux de dilution comportant de façon connue un corps basse pression comprenant une soufflante amont (1) liée à un compresseur basse pression (2), le corps basse pression étant entraîné par une turbine basse pression (6), ladite turbine étant elle-même entraînée par un générateur de gaz comportant un compresseur haute pression (3), une soufflante aval (12), une chambre de combustion (4) et une turbine haute pression (5) entraînant le compresseur haute pression (3), turboréacteur caractérisé en ce que la soufflante avale (12) est entraînée par une turbine (7) contrarotative et imbriquée avec la turbine basse pression (6) et en ce qu'il comporte deux circuits de flux froids séparés, le premier comportant la soufflante amont (1), possédant une entrée d'air frontale (E1) commune avec le flux chaud et une sortie d'air (S1) formée de deux demi-lunes (25a, 25b) encadrant latéralement l'éjection (S2) de la soufflante aval (12) tandis que le second circuit comportant la soufflante aval (12) possède une entrée d'air (E2) formée de deux demi-lunes (26a, 26b), encadrant latéralement la soufflante amont (1), les canaux issus des deux demi-lunes de ladite entrée d'air se rejoignant pour former autour du flux chaud un canal annulaire (27) dans lequel est disposée la soufflante aval (12), la sortie dudit second flux froid étant annulaire et entourant le flux chaud.

2. Turboréacteur selon la revendication 1, caractérisé en ce que la soufflante amont (1) a un diamètre tel que le taux de dilution entre le flux froid qui la traverse et le flux chaud est compris entre 6 et 8.

3. Turboréacteur selon l'une quelconque des revendications 1 ou 2 caractérisé en ce que la soufflante aval (12) a un diamètre tel que le taux de dilution entre le flux froid qui la traverse et le flux chaud est compris entre 4 et 6.

4. Turboréacteur selon la revendication 1 caractérisé en ce qu'il comporte un inverseur de flux (19) apte à inverser le cheminement d'air du premier circuit de flux froid et partiellement du second circuit.

5. Turboréacteur selon l'une quelconque des revendications 2 à 4 caractérisé en ce qu'il comporte une nacelle (18) possédant deux coquilles basculantes (20), les canaux formant les deux circuits de flux froids imbriqués étant réalisés dans la structure de la nacelle.

6. Turboréacteur selon la revendication 5 caractérisé en ce que la nacelle (18) a une forme générale ovoïde, les sections droites étant en forme d'ellipses de grand axe horizontal.

7. Turboréacteur selon l'une des revendications 5 ou 6 caractérisé en ce que son inverseur de flux est du type à portes (19).

8. Turboréacteur selon la revendication 7 caractérisé en ce que l'inverseur comporte deux portes, chacune étant portée par une des coquilles (20) basculantes de la nacelle.

9. Turboréacteur selon l'une quelconque des revendications 5 à 8 caractérisé en ce qu'il est suspendu à un mât (30) et comporte deux suspensions l'une avant (13), l'autre arrière (15), lesdites suspensions traversant des passages verticaux (23a, 23b) ménagés au travers du premier circuit de flux froid pour la suspension amont et au travers du premier et du second circuits de flux froids pour la suspension aval.

10. Turboréacteur selon la revendication 9 caractérisé en ce que la nacelle comporte une partie supérieure structurale (29) solidaire du mât support (30) et s'étendant sur toute la longueur de ladite nacelle, ladite partie supérieure structurale comportant deux bords latéraux portant des charnières (31) de basculement de coquilles d'ouverture (20).

11. Turboréacteur selon la revendication 10 caractérisé en ce que chaque coquille (20) comporte une forme évolutive en caissons formant à l'avant une demi-lune latérale (26a, 26b) pour l'entrée d'air (E2) du second circuit de flux froid, ladite demi-lune évoluant au droit du compresseur haute pression en une forme en pétale séparée des sorties haute et basse du premier circuit par des cloisons radiales (33), ladite coquille formant ensuite avec la partie structurale au niveau de la soufflante aval une demi lune (25a, 25b) pour la sortie d'air (S1) du premier circuit de flux froid tandis qu'à ce niveau l'entrée d'air (E2) du second circuit est formé entre la coque interne de la coquille et le carter, ladite coquille formant enfin au niveau de la section de sortie une demi-lune latérale (25a, 25b) pour la sortie (S1) du premier circuit de flux froid, tandis qu'à ce niveau la sortie (27) du second circuit est annulaire et entoure la section de sortie (17) du flux chaud.

## Patentansprüche

1. Turboluftstrahltriebwerk mit hohem Bypass-Verhältnis, in bekannter Weise bestehend aus einem Niederdruckkörper mit einem Frontgebläse (1), das mit einem Niederdruckkompressor (2) verbunden ist, wobei der Niederdruckkörper von einer Niederdruckturbine (6) angetrieben wird, wobei die genannte Turbine ihrerseits von einem Gasgenerator angetrieben wird, der einen Hochdruckkompressor (3), ein Heckgebläse (12), eine Brennkammer (4) und eine Hochdruckturbine (5) aufweist, die den Hochdruckkompressor (3) antreibt,
dadurch gekennzeichnet,
daß das Heckgebläse (12) durch eine Turbine (7) mit entgegengesetzter Drehrichtung angetrieben wird, die sich mit der Niederdruckturbine (6) überlappt, und daß es zwei getrennte Mantelstromkreise aufweist, wobei der erste das Frontgebläse (1) enthält, das einen Frontlufteingang (E1) gemeinsam mit dem Primärstrom sowie einen Luftausgang (S1) besitzt, der von zwei Halbmonden (25a, 25b) gebildet wird, die den Ausstoß (S2) des Heckgebläses (12) seitlich einrahmen, während der zweite Kreis, der das Heckgebläse (12) enthält, einen Lufteingang (E2) besitzt, der von zwei Halbmonden (26a, 26b) gebildet wird, die das Frontgebläse (1) seitlich einrahmen, wobei die Kanäle, die von den beiden Halbmonden des genannten Lufteingangs gebildet werden, zusammenlaufen, um um den Primärstrom herum einen Ringkanal (27) zu bilden, in dem das Heckgebläse (12) angeordnet ist, wobei der Ausgang des genannten zweiten Mantelstroms kreisförmig ist und den Primärstrom umgibt.

2. Turboluftstrahltriebwerk nach Anspruch 1, dadurch gekennzeichnet, daß das Frontgebläse (1) einen solchen Durchmesser hat, daß das Bypass-Verhältnis zwischen dem Mantelstrom, der ihn durchquert, und dem Primärstrom zwischen 6 und 8 liegt.

3. Turboluftstrahltriebwerk nach einem der Ansprüche 1 oder 2, dadurch gekennzeichnet, daß das Heckgebläse (12) einen solchen Durchmesser hat, daß das Bypass-Verhältnis zwischen dem Mantelstrom, der ihn durchquert, und dem Primärstrom zwischen 4 und 6 liegt.

4. Turboluftstrahltriebwerk nach Anspruch 1, dadurch gekennzeichnet, daß es einen Stromumkehrer (19) aufweist, der geeignet ist, den Luftfluß des ersten Mantelstromkreises und teilweise des zweiten Kreises umzukehren.

5. Turboluftstrahltriebwerk nach einem der Ansprüche 2 bis 4, dadurch gekennzeichnet, daß es einen Rumpf (18) aufweist, der zwei kippbare Schalen (20) hat, wobei die Kanäle, die die beiden sich überlappenden Mantelstromkreise bilden, in der Rumpfkonstruktion ausgeführt sind.

6. Turboluftstrahltriebwerk nach Anspruch 5, dadurch gekennzeichnet, daß der Rumpf (18) allgemein eiförmig ist, wobei die Profilschnitte die Form einer Ellipse mit einer horizontalen langen Achse haben.

7. Turboluftstrahltriebwerk nach einem der Ansprüche 5 oder 6, dadurch gekennzeichnet, daß sein Stromumkehrer des Typs mit Klappen (19) ist.

8. Turboluftstrahltriebwerk nach Anspruch 7, dadurch gekennzeichnet, daß der Stromumkehrer zwei Klappen aufweist, die jeweils auf einer der kippbaren Schalen (20) des Rumpfs ruhen.

9. Turboluftstrahltriebwerk nach einem der Ansprüche 5 bis 8, dadurch gekennzeichnet, daß es an einem Stiel (30) aufgehängt ist und zwei Aufhängungen hat, die eine vorn (13), die andere hinten (15), wobei die genannten Aufhängungen durch senkrechte Durchlässe (23a, 23b) verlaufen, die für die vordere Aufhängung quer zum ersten Mantelstromkreis und für die hintere Aufhängung quer zum ersten und zweiten Mantelstromkreis ausgeführt sind.

10. Turboluftstrahltriebwerk nach Anspruch 9, dadurch gekennzeichnet, daß der Rumpf einen oberen Konstruktionsteil (29) enthält, der mit dem Tragstiel (30) fest verbunden ist und über die gesamte Länge des genannten Rumpfs verläuft, wobei der genannte obere Konstruktionsteil zwei Seitenränder aufweist, an denen sich Scharniere (31) zum Kippen von Öffnungsschalen (20) befinden.

11. Turboluftstrahltriebwerk nach Anspruch 10, dadurch gekennzeichnet, daß jede Schale (20) eine kastenförmig erweiterbare Form hat, die vorn einen seitlichen Halbmond (26a, 26b) für den Lufteingang (E2) des zweiten Mantelstromkreises bildet, wobei der genannte Halbmond rechts vom Hochdruckkompressor in eine Keulenform übergeht, die durch radiale Querwände (33) von den hohen und niedrigen Ausgängen des ersten Kreises getrennt sind, wobei die genannte Schale dann mit dem Konstruktionsteil in Höhe des Heckgebläses einen Halbmond (25a, 25b) für den Luftausgang (S1) des ersten Mantelstromkreises bildet, während in dieser Höhe der Lufteingang (E2) des zweiten Kreises zwischen der Innenhaut der Schale und dem Gehäuse gebildet wird, wobei die genannte Schale schließlich in Höhe des Ausgangsquerschnitts einen seitlichen Halbmond (25a, 25b) für den Ausgang (S1) des ersten Mantelstromkreises bildet, während in dieser Höhe der Ausgang (27) des zweiten Kreises kreisförmig ist und den Ausgangsquerschnitt (17) des Primärstroms umgibt.

## Claims

1. High bypass ratio turbojet engine including, in a known way, a low pressure spool comprising an upstream fan (1) linked to a low-pressure compressor (2), the low-pressure spool being driven by a low-pressure turbine (6), the said turbine being itself driven by a gas generator including a high-pressure compressor (3), a downstream fan (12), a combustion chamber (4) and a high-pressure turbine (5) driving the high-pressure compressor (3), the turbojet engine being characterised in that the downstream fan (12) is driven by a contra-rotating turbine (7) imbricated with the low-pressure turbine (6) and in that it includes two separate cold flow circuits, the first including the upstream fan (1), possessing a frontal air intake (E1) common with the hot flow and an air outlet (S1) formed by two half moons (25a, 25b) laterally framing the ejection (S2) from the downstream fan (12) while the second circuit including the downstream fan (12) possesses an air intake (E2) formed by two half moons (26a, 26b), laterally framing the upstream fan (1), the channels coming from the two half moons of the said air intake joining together to form an annular channel (27) around the hot flow in which is arranged the downstream fan (12), the outlet of the said second cold flow being annular and surrounding the hot flow.

2. Turbojet engine according to Claim 1, characterised in that the upstream fan (1) has a diameter such that the bypass ratio between the cold flow which flows through it and the hot flow lies between 6 and 8.

3. Turbojet engine according to either of Claims 1 or 2, characterised in that the downstream fan (12) has a diameter such that the bypass ratio between the cold flow which passes through it and the hot flow lies between 4 and 6.

4. Turbojet engine according to Claim 1, characterised in that it includes a flow reverser (19) able to reverse the routing of air from the first cold flow circuit and partially from the second circuit.

5. Turbojet engine according to any one of Claims 2 to 4, characterised in that it includes a nacelle (18) having two tilting shells (20), the channels forming the two imbricated cold flow circuits being produced in the structure of the nacelle.

6. Turbojet engine according to Claim 5, characterised in that the nacelle (18) has a generally oval shape, the cross-sections being in the shape of ellipses with horizontal large axis.

7. Turbojet engine according to one of Claims 5 or 6, characterised in that its flow reverser is of the type with doors (19).

8. Turbojet engine according to Claim 7, characterised in that the reverser includes two doors, each being carried by one of the tilting shells (20) of the nacelle.

9. Turbojet engine according to any one of Claims 5 to 8, characterised in that it is suspended from a pylon (30) and includes two suspensions, one at the front (13), the other at the rear (15), the said suspensions passing through vertical passages (23a, 23b) formed through the first cold flow circuit for the upstream suspension and through the first and the second cold flow circuits for the downstream suspension.

10. Turbojet engine according to Claim 9, characterised in that the nacelle includes an upper structural part (29) integral with the support pylon (30) and extending over the whole length of the said nacelle, the said upper structural part including two lateral edges bearing hinges (31) for tilting the opening shells (20).

11. Turbojet engine according to Claim 10, characterised in that each shell (20) includes a shape developing into compartments forming, at the front, a lateral half moon (26a, 26b) for the air intake (E2) of the second cold flow circuit, the said half moon developing in line with the high-pressure compressor into a petal shape separated from the high and low outputs of the first circuit via radial partitions (33), the said shell next forming a half moon (25a, 25b) with the structural part in the region of the downstream fan for the air outlet (S1) of the first cold flow circuit while in this region the air intake (E2) of the second circuit is formed between the inner skin of the shell and the casing, the said shell finally forming, in the region of the outlet section, a lateral half moon (25a, 25b) for the outlet (S1) of the first cold flow circuit, while in this region the outlet (27) of the second circuit is annular and surrounds the outlet section (17) of the hot flow.
